# EUROPÄISCHE PATENTSCHRIFT

(11) **EP 1 245 467 B1**
(45) Veröffentlichungstag und Bekanntmachung des Hinweises auf die Patenterteilung: **30.05.2007**
(21) Anmeldenummer: 02005883.0
(22) Anmeldetag: 14.03.2002
(51) Int. Cl.: B60S 1/52

(54) **Düse für eine Scheibenwaschanlage eines Kraftfahrzeugs**
Nozzle for a vehicle windscreen washing device
Buse d'éjection pour un dispositif lave-glace pour véhicule

(30) Priorität: 28.03.2001 DE 10115542
(43) Veröffentlichungstag der Anmeldung: 02.10.2002
(73) Patentinhaber: SIEMENS AKTIENGESELLSCHAFT, 80333 München (DE)
(72) Erfinder: Küch, Theo, 36214 Nentershausen (DE); Neumann, Willi, 36179 Bebra (DE)

(56) Entgegenhaltungen:
- WO-A-98/26964
- DE-A- 3 047 396
- DE-A- 3 925 800
- FR-A- 2 677 938
- US-A- 6 050 503

## Beschreibung

Die Erfindung betrifft eine Düse für eine Scheibenwaschanlage eines Kraftfahrzeugs, wobei die Düse in ein Düsengehäuse mit einem Flüssigkeitsstrahlaustritt eingesetzt ist, wobei der Düseneinsatz in unterschiedlichen, vordefinierten Neigungswinkeln in das Düsengehäuse einsetzbar ist.

Düsen der vorstehenden Art werden in Kraftfahrzeugen beispielsweise vor der Windschutzscheibe angeordnet, um bei Bedarf die Scheibe durch Aufsprühen mit Reinigungsflüssigkeit reinigen zu können. Bei unterschiedlichen Fahrzeugen muß eine solche Düse in der Regel in einem unterschiedlichen Abstand und in einem unterschiedlichen Neigungswinkel zur Scheibe angeordnet werden. Letzteres ist erforderlich, damit der Flüssigkeitsstrahl in einem zum Reinigen der Scheibe optimalen Bereich auf die Scheibe auftrifft.

Das Düsengehäuse wird daher üblicherweise fahrzeugspezifisch als Spritzgußteil ausgebildet. Hierzu sind unterschiedliche Spritzgußformen notwendig, wodurch erhebliche Kosten verursacht werden.

Aus der deutschen Patentanmeldung 100 20 044.3 der Patentanmelderin ist eine Düse für die Scheibenwaschanlage eines Kraftfahrzeuges bekannt, bei der der Düseneinsatz auf zwei verschiedene Weisen in den Aufnahmeschacht eingesetzt werden kann. Hierdurch ergeben sich je nach Ausrichtung des Spritzdüseneinsatzes zwei verschiedene Spritzwinkel, so daß die Möglichkeit besteht, die Düse an zwei verschiedene Fahrzeuge anzupassen.

Aus der DE 30 47 396 A1 ist eine Scheibenwaschanlage für Fahrzeuge bekannt, bei der der Neigungswinkel in Abhängigkeit von der Fahrgeschwindigkeit verstellbar ist.

Die FR 2 677 938 A offenbart eine mittels eines motorischen Antriebs verstellbare Düse.

Aus der US 6,050,503 A ist eine Düseneinrichtung bekannt geworden, bei der das Düsengehäuse gegenüber einem Karosserieteil verstellbar ist. Nachteilig hierbei ist jedoch, dass sich der Neigungswinkel der Düse nach der Montage verstellen kann.

Aufgabe der Erfindung ist es, eine Düse für eine Scheibenwaschanlage eines Kraftfahrzeuges anzugeben, mit der verschiedene Strahlneigungswinkel eingestellt werden können und die somit für unterschiedliche Fahrzeuge einsetzbar sind.

Die Aufgabe wird erfindungsgemäß dadurch gelöst, daß der Düseneinsatz ein Eingriffselement aufweist, welches in eine Verzahnung des Düsengehäuses eingreift und daß ein Fixierpunkt der Drehpunkt des Düseneinsatzes ist und daß der Düseneinsatz in dem allen vordefinierten Neigungswinkeln gemeinsamen Drehpunkt durch eine Klipsverbindung im Düsengehäuse fixiert ist. Hierdurch wird erreicht, daß der Strahlwinkel an die unterschiedlichen Gegebenheiten bei verschiedenen Kraftfahrzeugen angepaßt werden kann. Dies hat zur Folge, daß ein und dieselbe Düse für unterschiedliche Kraftfahrzeuge eingesetzt werden kann, wobei alleine durch dein Einsatz des Düseneinsatzes in unterschiedlichen Neigungswinkeln in das Düsengehäuse der Strahlwinkel verändert wird. Als Folge hiervon können deutliche Kosteneinsparungen realisiert werden, die sowohl die Kosten für Spritzgußformen als auch die Lagerkosten betreffen.

Insbesondere ist vorgesehen, daß das Düsengehäuse Mittel zum Fixieren des Düseneinsatzes unter den unterschiedlichen Neigungswinkeln aufweist. Hierdurch wird erreicht, daß der Winkel des Flüssigkeitsstrahlaustrittes dauerhaft auf den für das jeweilige Fahrzeug optimalen Wert eingestellt bleibt. Dies kann insbesondere dadurch erreicht werden, daß das Düsengehäuse eine Feinverzahnung aufweist, über die die unterschiedlichen, vordefinierten Neigungswinkel des Düseneinsatzes festgelegt sind. Durch die Feinverzahnung wird eine radiale Verschiebung des Düseneinsatzes sicher vermieden.

In einer besonderen Ausführungsform ist vorgesehen, daß die unterschiedlichen Neigungswinkel des Düseneinsatzes in einem vorgegebenen Raster festgelegt sind. Das vorgegebene Raster kann insbesondere konstante Winkelabstände definieren, in denen der Neigungswinkel des Düseneinsatzes verstellt werden kann. Es ist jedoch auch denkbar, daß das Raster eine Veränderung des Neigungswinkels in unterschiedlichen Winkelstufen ermöglicht, wobei die einzelnen Winkelstufen an die gewünschten Neigungswinkel für einzelne Fahrzeugtypen angepaßt sind. Hierdurch wird die Einstellung des Düseneinsatzes für einen bestimmten Fahrzeugtyp besonders einfach bewerkstelligt.

Erfindungsgemäß ist vorgesehen, daß der Düseneinsatz in einem allen Neigungswinkeln gemeinsamen Drehpunkt fixiert ist. Hierdurch wird eine sichere Befestigung des Düseneinsatzes im Düsengehäuse erzielt. Dadurch ist der Düseneinsatz in dem allen Neigungswinkeln gemeinsamen Drehpunkt durch eine Klipsverbindung im Düsengehäuse fixiert sein.

Die Änderung des Neigungswinkels des Düseneinsatzes kann dabei durch Herausdrücken des Düseneinsatzes aus dem Aufnahmeschacht, anschließendes Schwenken der Düse im Schacht in den gewünschten Neigungswinkel und erneutem Fixieren des Düseneinsatzes durch Hineindrücken des Düseneinsatzes in den Düsenschacht erzielt werden.

Bei dem Düseneinsatz kann es sich insbesondere um ein Fluidic-Element handeln, das so ausgestaltet ist, daß der austretende Flüssigkeitsstrahl zwischen zwei Austrittswinkeln wechselt.

Die Erfindung wird nachfolgend anhand eines Ausführungsbeispiels und der Zeichnung näher beschrieben. Es zeigen:
- Figur 1: eine Gesamtansicht der Düse,
- Figur 2: eine Darstellung des Düsengehäuses.

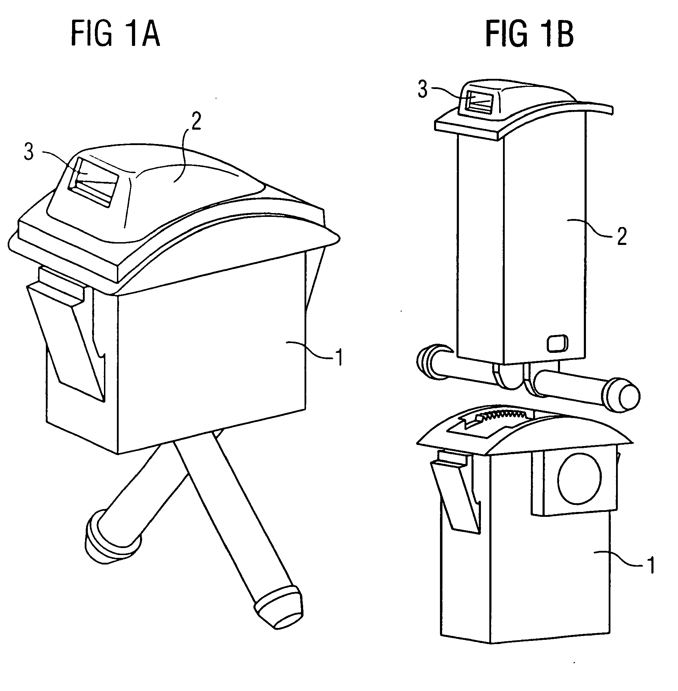

Figur 1a zeigt eine Gesamtdarstellung der Düse mit dem Düsengehäuse 1 und dem darin befindlichen Düseneinsatz 2, während in Figur 1b das Düsengehäuse 1 und der Düseneinsatz 2 getrennt sind. Der Düseneinsatz 2 weist eine Fläche 3 auf, in der eine Strahlaustrittsöffnung vorhanden ist. Die Düse hat eine Voreinstellung und ist als ZSB-Düse bzw. zusammengebaute Einheit mit einer Voreinstellung in der Wasserkastenabdeckung montierbar. Um den Strahlneigungswinkel der Düse an verschiedene Fahrzeuge anzupassen, ist der Düseneinsatz in unterschiedlichen Winkeln in das Düsengehäuse einsetzbar und wird unter den unterschiedlichen Neigungswinkeln sicher fixiert. Hierdurch wird eine ungewollte Verstellung verhindert.

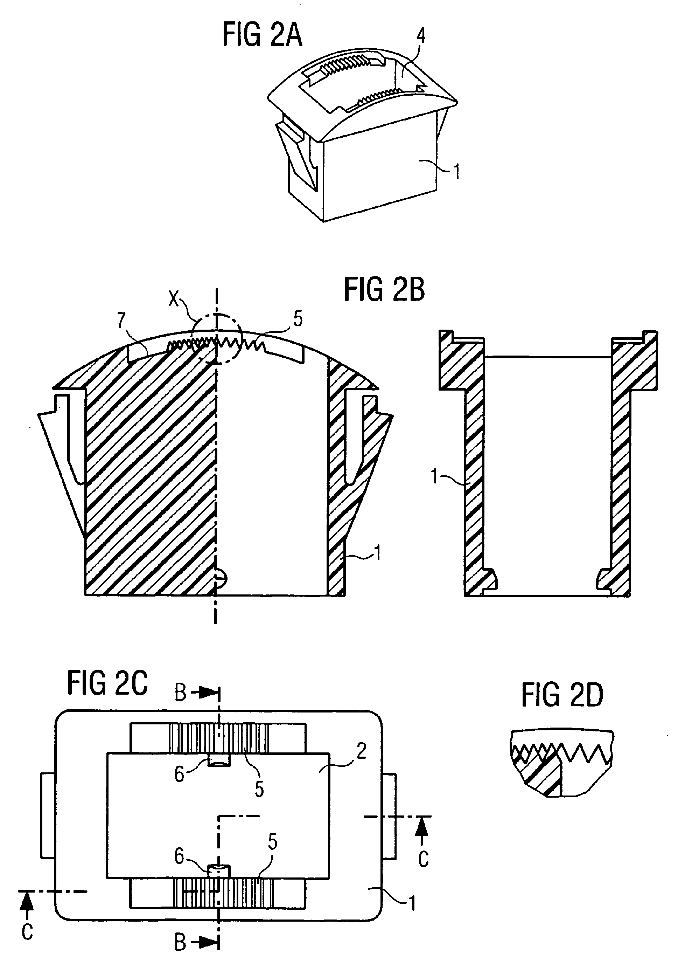

Die Fixierung wird erfindungsgemäß durch eine Feinverzahnung im Düsengehäuse erreicht, das in Figur 2 näher dargestellt ist. Figur 2a zeigt das Düsengehäuse 1 in perspektivischer Ansicht, wobei das Gehäuse 1 einen Aufnahmeschacht 4 für den Düseneinsatz aufweist. Figur 2b zeigt einen Schnitt durch das Düsengehäuse 1. Im oberen Bereich der Düse 1, in dem der Düseneinsatz auf dem Düsengehäuse aufliegt, ist eine gekrümmte Auflagefläche 7 mit einer Verzahnung 5 vorgesehen. Die Verzahnung 5 ist in Figur 2d vergrößert dargestellt.

Der in Figur 2 nicht dargestellte Düseneinsatz weist ein Eingriffselement auf, das in die Verzahnung 5 des Düsengehäuses eingreift. Das Eingriffselement kann insbesondere ebenfalls eine Verzahnung sein. Durch das Ineinandergreifen dieser beiden Feinverzahnungen wird eine Winkelverstellung des Düseneinsatzes innerhalb des Aufnahmeschachtes vermieden, wobei gleichzeitig jedoch durch entsprechende Dimensionierung des Düsengehäuses bzw. des Aufnahmeschachts unterschiedliche Winkelstellungen des Düseneinsatzes realisierbar sind.

Figur 2c zeigt eine Draufsicht auf das Düsengehäuse 1 mit dem Aufnahmeschacht 2 und der Verzahnung 5. Weiterhin sind Befestigungselemente 6 an dem Düsengehäuse im Aufnahmeschacht dargestellt, mittels derer der Düseneinsatz im Gehäuse 1 fixiert wird, wobei der Fixierungspunkt der Drehpunkt des Düseneinsatzes ist.

Eine Veränderung des Neigungswinkels des Düseneinsatzes innerhalb des Aufnahmeschachtes kann dadurch erreicht werden, daß der Düseneinsatz zunächst aus dem Düsenschacht leicht herausgedrückt wird. Hierdurch wird erreicht, daß die Verzahnung zwischen dem Gehäuse 1 und dem Düseneinsatz gelöst wird. Somit ist ein Schwenken der Düse im Schacht möglich und durch erneutes Hineindrücken des Düseneinsatzes in dem Aufnahmeschacht wird der Düseneinsatz erneut fixiert. Das Fixieren wird hierbei durch eine Klipsverbindung erreicht.

Die erfindungsgemäße variable Ausführung einer Fluidicdüse ermöglicht den Einsatz gleicher Düsen mit unterschiedlicher Neigungswinkelpositionierbarkeit bei gleichem Schacht und gleichem Lochbild im Wasserkasten.

## Patentansprüche

1. Düse für eine Scheibenwaschanlage eines Kraftfahrzeugs, wobei die Düse ein Düsengehäuse (1) mit einem Aufnahmeschacht (4) aufweist, in den ein Düseneinsatz (2) mit einem Flüssigkeitsstrahlaustritt eingesetzt ist, wobei der Düseneinsatz (2) in unterschiedlichen, vordefinierten Neigungswinkeln in das Düsengehäuse (1) einsetzbar ist, **dadurch gekennzeichnet, daß** der Düseneinsatz (2) ein Eingriffselement aufweist, welches in eine Verzahnung (5) des Düsengehäuses (1) eingreift und daß ein Fixierungspunkt der Drehpunkt des Düseneinsatzes (2) ist und daß der Düseneinsatz (2) in dem allen vordefinierten Neigungswinkeln gemeinsamen Drehpunkt durch eine Klipsverbindung im Düsengehäuse (1) fixiert ist.

2. Düse nach Anspruch 1, **dadurch gekennzeichnet, daß** das Düsengehäuse (1) Mittel zum Fixieren des Düseneinsatzes (2) unter unterschiedlichen Neigungswinkeln aufweist.

3. Düse nach Anspruch 1 oder 2, **dadurch gekennzeichnet, daß** das Düsengehäuse (1) eine Feinverzahnung aufweist, über die unterschiedliche Neigungswinkel des Düseneinsatzes (2) festgelegt sind.

4. Düse nach einem der vorhergehenden Ansprüche, **dadurch gekennzeichnet, daß** die unterschiedlichen Neigungswinkel des Düseneinsatzes (2) in einem vorgegebenen Raster festgelegt sind.

5. Düse nach einem der vorhergehenden Ansprüche, **dadurch gekennzeichnet, daß** der Einsatzwinkel des Düseneinsatzes (2) durch Herausdrücken des Düseneinsatzes (2) aus dem Düsenschacht, Schwenken der Düse im Schacht und erneutem Fixieren veränderbar ist.

6. Düse nach einem der vorhergehenden Ansprüche, **dadurch gekennzeichnet, daß** der Düseneinsatz (2) ein Fluidic-Element ist.

## Claims

1. Nozzle for a windscreen washing system of a motor vehicle, the nozzle having a nozzle housing (1) with a reception well (4), into which a nozzle insert (2) with a liquid-jet outlet is inserted, it being possible for the nozzle insert (2) to be inserted into the nozzle housing (1) at different predefined inclination angles, **characterized in that** the nozzle insert (2) has an engagement element which engages in a toothing (5) of the nozzle housing (1), and **in that** a fixing point is the centre of rotation of the nozzle insert (2), and **in that** the nozzle insert (2) is fixed in the nozzle housing (1) by means of a snap connection at the centre of rotation common to all the predefined inclination angles.

2. Nozzle according to Claim 1, **characterized in that** the nozzle housing (1) has means for fixing the nozzle insert at different inclination angles.

3. Nozzle according to Claim 1 or 2, **characterized in that** the nozzle housing (1) has a fine toothing, via which different inclination angles of the nozzle insert (2) are fixed.

4. Nozzle according to one of the preceding claims, **characterized in that** the different inclination angles of the nozzle insert (2) are fixed in a predetermined grid.

5. Nozzle according to one of the preceding claims, **characterized in that** the insertion angle of the nozzle insert (2) can be changed by the nozzle insert (2) being pressed out of the nozzle well, by the nozzle being pivoted in the well and by fixing once again.

6. Nozzle according to one of the preceding claims, **characterized in that** the nozzle insert (2) is a fluidic element.

## Revendications

1. Gicleur destiné à une installation de lavage de vitres d'un véhicule automobile, le gicleur comportant un boîtier de gicleur (1) avec un logement (4) dans lequel est inséré un bec de gicleur (2) avec une sortie pour jet de liquide, le bec de gicleur (2) pouvant être inséré dans le boîtier de gicleur (1) sous différents angles d'inclinaison prédéfinis, **caractérisé par le fait que** le bec de gicleur (2) comporte un élément encastrable qui s'encastre dans une denture (5) du boîtier de gicleur (1) et qu'un point de fixation est le centre de rotation du bec de gicleur (2) et que le bec de gicleur (2) est maintenu, par une liaison à agrafe dans le boîtier de gicleur (1), au centre de rotation commun à tous les angles d'inclinaison prédéfinis.

2. Gicleur selon la revendication 1, **caractérisé par le fait que** le boîtier de gicleur (1) comporte des moyens pour fixer le bec de gicleur (2) sous différents angles d'inclinaison.

3. Gicleur selon la revendication 1 ou 2, **caractérisé par le fait que** le boîtier de gicleur (1) comporte une denture fine par l'intermédiaire de laquelle les différents angles d'inclinaison du bec de gicleur (2) sont définis.

4. Gicleur selon l'une des revendications précédentes, **caractérisé par le fait que** les différents angles d'inclinaison du bec de gicleur (2) sont définis par une trame donnée.

5. Gicleur selon l'une des revendications précédentes, **caractérisé par le fait que** l'angle d'insertion du bec de gicleur (2) peut être modifié en pressant le bec de gicleur (2) hors du logement du gicleur, en faisant pivoter le gicleur dans le logement et en le fixant de nouveau.

6. Gicleur selon l'une des revendications précédentes, **caractérisé par le fait que** le bec de gicleur (2) est un élément fluidic.
